(19) Europäisches Patentamt

European Patent Office

Office européen des brevets

(11) **EP 0 994 464 A1**

(12) **DEMANDE DE BREVET EUROPEEN**

(43) Date de publication:
**19.04.2000 Bulletin 2000/16**

(51) Int. Cl.⁷: **G10L 21/02**

(21) Numéro de dépôt: **99203235.9**

(22) Date de dépôt: **04.10.1999**

(84) Etats contractants désignés:
**BE CH CY DE DK ES FI FR GB GR IE IT LI LU MC NL PT SE**
Etats d'extension désignés:
**AL LT LV MK RO SI**

(30) Priorité: **13.10.1998 FR 9812821**

(71) Demandeur:
**Koninklijke Philips Electronics N.V.**
**5621 BA Eindhoven (NL)**

(72) Inventeur: **Lambert, Thierry**
**75008 Paris (FR)**

(74) Mandataire: **Chaffraix, Jean**
**Société Civile S.P.I.D.**
**156, Boulevard Haussmann**
**75008 Paris (FR)**

(54) **Procédé destiné à génére un signal large bande a partir d'un signal en bande étroite, appareil pour realiser un tel procédé et equipement téléphonique comportant un tel appareil**

(57) L'invention propose une méthode pour améliorer la qualité acoustique des équipements audio fonctionnant avec des signaux harmoniques dans une bande de fréquences donnée. La méthode consiste à élargir la bande spectrale des signaux harmoniques en leur ajoutant des composantes spectrales générées à partir d'informations contenues dans la bande de fréquence initiale. Pour cela, le signal harmonique initial est multiplié avec une fonction de lui-même de façon à restituer des fréquences manquantes telles que le fondamental ou les premiers harmoniques.

Application : équipements audio, téléphones.

FIG.1

**Description**

L'invention concerne un appareil destiné à générer un signal dit large bande à partir d'un signal d'entrée harmonique en bande dite étroite, comportant :

- un dispositif d'extension de spectre recevant en entrée un signal en bande étroite pour générer un signal intermédiaire en bande élargie à partir d'informations contenues dans ledit signal en bande étroite,
- un dispositif de filtrage pour filtrer ledit signal intermédiaire en bande élargie et pour en extraire une partie de spectre non contenue dans la bande étroite du signal d'entrée,
- un additionneur pour additionner le signal de sortie dudit dispositif de filtrage audit signal d'entrée en bande étroite et pour fournir en sortie ledit signal large bande.

Elle concerne également un récepteur téléphonique destiné à recevoir en entrée un signal harmonique en bande étroite pour délivrer en sortie d'un haut-parleur / écouteur un signal harmonique analogique dit large bande comprenant des fréquences situées en dehors de la bande téléphonique.

Elle concerne enfin un procédé pour générer un signal dit large bande à partir d'un signal harmonique en bande dite étroite, comportant les étapes suivantes :

- une étape de réception d'un signal harmonique en bande étroite,
- une étape d'extension de spectre pour générer un signal intermédiaire en bande élargie à partir d'informations spectrales contenues dans le signal reçu en bande étroite,
- une étape de filtrage pour filtrer le signal intermédiaire et pour en extraire une partie de spectre non contenue dans la bande étroite,
- une étape d'addition pour additionner le signal obtenu à l'issu de l'étape de filtrage précédente au signal reçu en bande étroite et pour fournir en sortie un signal large bande.

Elle a de nombreuses applications notamment dans les équipements audio et les téléphones numériques pour élargir la bande spectrale des signaux harmoniques et ainsi améliorer le confort acoustique de l'utilisateur.

La demande de brevet européen publiée sous le numéro EP 732 687 A2 décrit un appareil du genre mentionné dans le paragraphe introductif destiné à être appliqué à des signaux de parole. Il comporte un dispositif d'extension de spectre comprenant un analyseur prédictif linéaire LPC (de l'anglais Linear Predictive Coding) pour effectuer une analyse LPC du signal en bande étroite et pour en extraire des caractéristiques LPC ainsi qu'un synthétiseur LPC pour synthétiser un signal de parole numérique large bande à partir des caractéristiques LPC extraites du signal en bande étroite.

Le brevet cité ne s'applique qu'aux signaux de parole et présente certains inconvénients, comme par exemple celui d'utiliser des circuits coûteux d'analyse et de synthèse prédictive LPC qui nécessitent une puissance de calcul considérable et qui impliquent des dispositifs complexes de codage / décodage de la parole. De plus, la méthode citée introduit des délais pour traiter les messages d'informations qui sont transmis sur des trames de données numériques.

Un objet de l'invention est de décrire une méthode plus simple à mettre en oeuvre que la méthode connue et qui ne présente pas les inconvénients cités, pouvant s'appliquer à tout signal harmonique reçu dans une bande dite étroite, c'est-à-dire une bande de fréquence limitée vers les basses et / ou les hautes fréquences, pour augmenter en réception la largeur de spectre du signal.

Pour cela, l'invention prévoit un appareil tel que mentionné dans le paragraphe introductif remarquable en ce que le dispositif d'extension de spectre comprend un organe de traitement du signal pour multiplier ledit signal d'entrée en bande étroite par une fonction de lui-même.

Selon un mode de réalisation préféré de l'invention, ledit signal intermédiaire, noté s(t) est obtenu par un calcul de produit défini par :

$$s(t) = e(t) * f(t)$$

- où e(t) est le signal d'entrée en bande étroite et comporte au moins deux harmoniques,
- f(t) est une fonction dépendante du signe et / ou de l'amplitude de e(t),
- le symbole * représente l'opération de multiplication.

Il est également prévu un procédé du genre mentionné dans le paragraphe introductif remarquable en ce que ladite étape d'extension de spectre comprend une étape de traitement du signal pour multiplier ledit signal d'entrée en bande étroite par une fonction de lui-même.

La description suivante, faite en regard des dessins ci-annexés, le tout donné à titre d'exemple non limitatif fera bien comprendre comment l'invention peut être réalisée.

La figure 1 est un schéma bloc représentant un exemple d'appareil selon l'invention.

La figure 2 montre deux courbes caractéristiques des filtres BPF et BPF1 respectivement, représentant le gain en dB en fonction de la fréquence.

La figure 3 est une représentation spectrale d'un signal harmonique reçu en bande étroite respectivement en entrée et en sortie de l'appareil représenté à la figure 1.

La figure 4 est un organigramme pour illustrer un exemple de procédé selon l'invention.

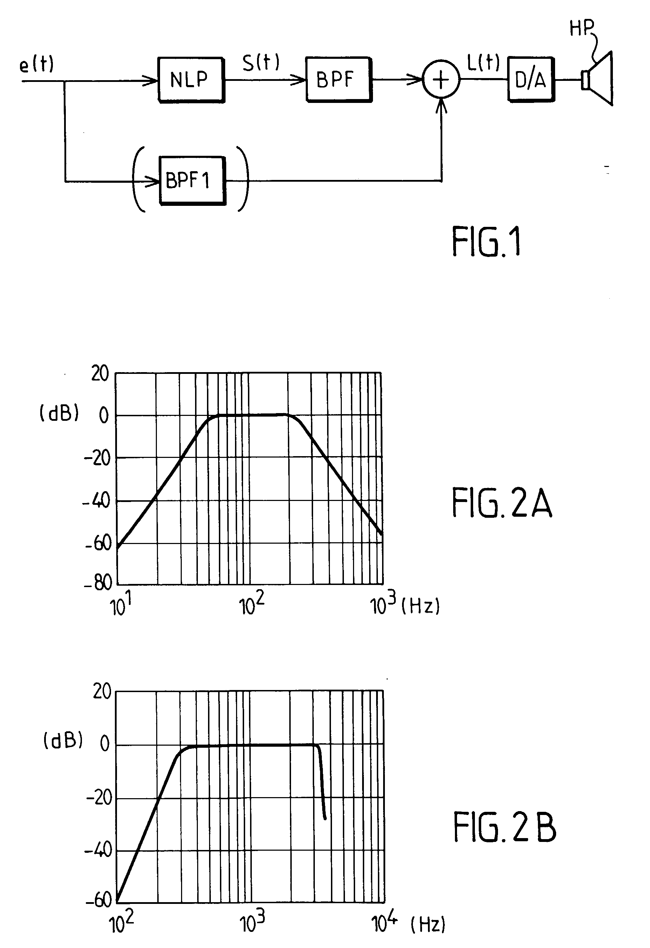

L'appareil représenté à la figure 1 est notamment destiné à être utilisé dans un récepteur téléphonique numérique de type DECT (de l'anglais Digital Enhanced Cordless Telecommunications) ou GSM (de l'anglais Global System for Mobile communications) mais il peut aussi être appliqué à tout équipement audio susceptible de transmettre un signal harmonique, tel qu'un signal de parole ou de musique, en vue d'élargir son spectre pour augmenter sa qualité audio. Il s'agit en particulier d'améliorer la qualité subjective d'un signal délivré en sortie d'un équipement audio en lui restituant des composantes spectrales 《 manquantes 》, non contenues dans sa bande passante. Notamment, ces composantes peuvent avoir été supprimées d'un signal dit original, lors d'opérations de codage / décodage, du fait d'une numérisation ou d'un filtrage, ces opérations étant destinées à transmettre le signal sur un canal ayant une bande passante donnée, plus étroite que la bande spectrale du signal original. Mais l'appareil peut également servir à créer des composantes spectrales artificielles à partir d'un signal d'origine ne possédant pas ces composantes.

Selon le mode de réalisation préféré illustré à titre d'exemple à la figure 1, l'appareil reçoit en entrée un signal harmonique e(t) dont le spectre est par exemple situé dans la bande dite téléphonique ou étroite comprise entre 300Hz et 3400Hz. Il fournit en sortie, par exemple vers un haut-parleur / écouteur HP via un convertisseur numérique / analogique D/A, un signal numérique L(t) dont le spectre s'étale sur une bande comprise entre 50Hz et 3400Hz. Le signal d'entrée e(t) est par exemple un signal téléphonique numérique obtenu après filtrage et / ou codage numérique d'un signal harmonique original, notamment un signal vocal, transmis dans la bande téléphonique [300Hz, 3400Hz]. Il comprend au moins deux harmoniques successifs centrés autour des fréquences $\omega_0$ et $\omega_1$ correspondant à deux harmoniques successifs du signal vocal original.

L'appareil comporte :

-   un dispositif d'extension de spectre NLP recevant le signal d'entrée e(t) pour générer un signal intermédiaire s(t) comportant des éléments de spectre non contenus dans la bande téléphonique,
-   un filtre BPF pour filtrer le signal intermédiaire s(t) et en extraire la partie de spectre non contenue dans la bande téléphonique du signal d'entrée e(t),
-   un additionneur pour additionner le signal de sortie du filtre BPF au signal d'entrée e(t) et pour fournir en sortie le signal L(t) dont la largeur de spectre est la somme de la bande du signal de sortie du filtre BPF et de la bande téléphonique,
-   un filtre BPF1 pour filtrer le signal téléphonique e(t) entre 300Hz et 3400Hz avant de l'additionner au signal de sortie du filtre BPF pour éviter un éventuel recouvrement. Ce filtrage étant facultatif, il est représenté entre parenthèses sur le schéma.

Le dispositif d'extension de spectre NLP ainsi que le filtre BPF peuvent par exemple être réalisés par un organe de traitement numérique du signal de type processeur numérique de signal DSP.

De façon classique, le signal téléphonique d'entrée e(t) est échantillonné à une fréquence de 8kHz et son amplitude est comprise entre -1 et +1.

Le signal intermédiaire s(t) en bande élargie est obtenu par un calcul de produit défini par :

$$s(t) = e(t) * f(t)$$

-   où e(t) est le signal d'entrée en bande étroite comportant au moins deux harmoniques,
-   le symbole * représente l'opération de multiplication,
-   f(t) est une fonction du signal d'entrée e(t) destinée à prendre en compte l'amplitude du signal d'entrée e(t), pendant l'opération de multiplication.

Selon le mode de réalisation préféré de l'invention, la fonction f(t) est égale à une constante A positive si e(t) > 0 et égale à l'opposé de e(t) sinon. La constante A est ajustable par un utilisateur extérieur en fonction de la qualité audio recherchée pour le signal en sortie du haut-parleur HP. En effet, plus la valeur de A est élevée, plus l'influence des fréquences synthétisée et juxtaposées au signal initial en bande 《 étroite 》 sera perceptible par l'utilisateur. Les critères de fixation de la valeur de A dépendent d'une part du confort acoustique perçu de façon subjective par chaque utilisateur et d'autre part des caractéristiques acoustiques du récepteur dans lequel l'appareil est installé, et en particulier du haut-parleur HP. Des tests subjectifs réalisés avec un téléphone numérique de type DECT ont montré que la valeur de A varie entre 2 et 6 selon les utilisateurs.

Selon des variantes de réalisation, la fonction f(t) peut être remplacée par la fonction signe de e(t), la fonction valeur absolue de e(t), ou toute autre fonction non linéaire dépendante de e(t).

Le produit s(t) obtenu par multiplication du signal d'entrée e(t) avec une image de lui-même comporte des composantes fréquentielles correspondant à des harmoniques du signal vocal original non contenus dans la bande étroite, par exemple le fondamental et / ou les premiers harmoniques. Pour les signaux vocaux correspondant aux voix masculines, par exemple, le signal d'entrée e(t) dans la bande téléphonique contient en général les deuxième et troisième harmoniques du signal vocal original. Le fondamental et le premier harmonique étant situés en dehors de la bande [300Hz, 3400Hz], ils ont été supprimés lors de la transmission sur le canal téléphonique. Le produit s(t) obtenu avec un signal d'entrée comprenant les deuxième et troisième harmoniques du signal vocal original permet de restituer le fondamental. En effet, le produit des deuxième et troisième harmoniques, notés par exemple $\cos(\omega_0 t)$ et $\cos(\omega_1 t)$ dans le domaine temporel, fait apparaître leur différence dans le domaine fréquentiel qui correspond au fondamental $\cos((\omega_1 - \omega_0)t)$. Si le signal d'entrée comporte au moins les deuxième et quatrième harmoniques, le produit s(t) comporte le premier harmonique du signal vocal original, etc. Ainsi a-t-on permis d'élargir la bande du signal reçu par le canal téléphonique en restituant le fondamental et / ou les premiers harmoniques manquant.

La figure 2A représente à titre d'exemple, une courbe caractéristique d'un filtre BPF selon l'invention. Il est réalisé par un filtre passe-bande d'ordre 8 et de gain unitaire, coupant entre 50Hz et 250Hz pour éviter un éventuel recouvrement avec la bande téléphonique autour de 300Hz. Un exemple de courbe caractéristique convenant pour le filtre BPF1 est illustrée à la figure 2B. La courbe correspond à un filtre passe-bande d'ordre 12 et de gain unitaire coupant entre 300Hz et 3400Hz.

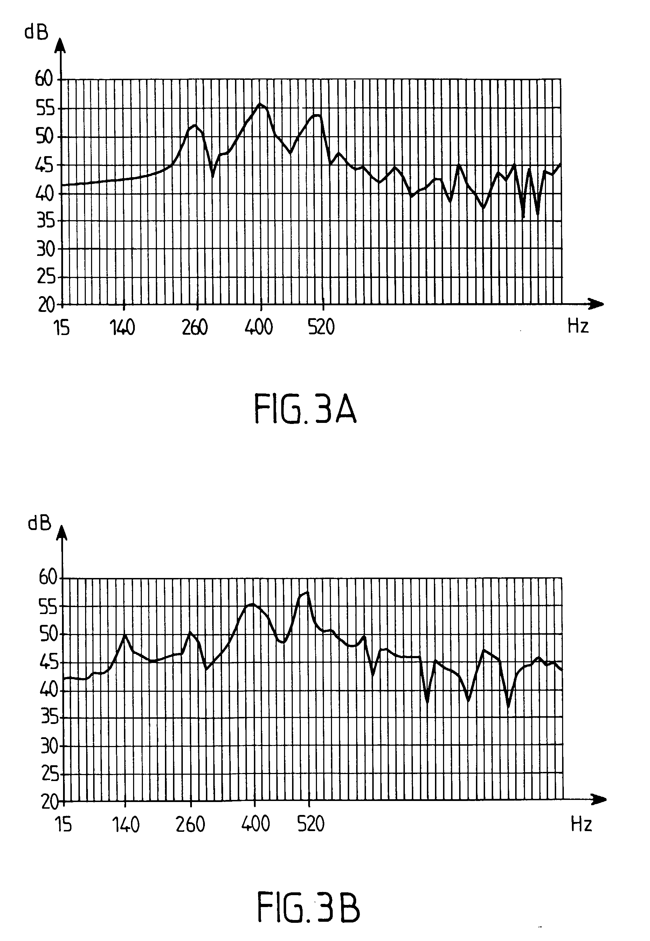

La figure 3A représente le spectre du signal d'entrée e(t) correspondant à un signal original harmonique, par exemple à de la musique ou de la parole, transmis dans la bande téléphonique entre 300Hz et 3400Hz. Il comprend trois pics d'amplitude autour des fréquences 260Hz, 400Hz et 520Hz, correspondant aux premier, deuxième et troisième harmoniques du signal original. La figure 3B représente le spectre du signal de sortie L(t). Il comporte, en plus des pics observés sur le spectre du signal d'entrée e(t), un quatrième pic autour de la fréquence 140Hz correspondant au fondamental du signal original.

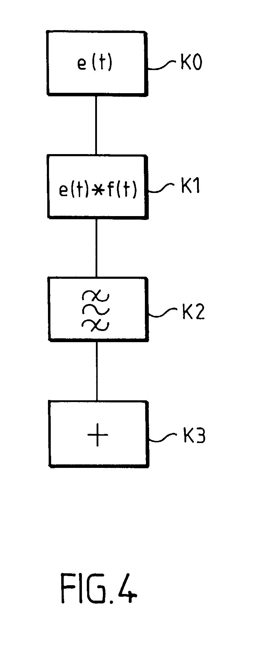

La figure 4 illustre un procédé pour générer un signal en bande élargie à partir d'un signal harmonique reçu dans une bande plus étroite. Il comporte les étapes suivantes représentée par les cases K0 à K3 :

- une étape initiale K0 de réception d'un signal e(t) comportant au moins deux harmoniques dans une certaine bande dite bande étroite, par exemple la bande téléphonique [300Hz, 3400Hz],
- une étape d'extension de spectre K1 pour calculer un produit e(t) * f(t) entre le signal d'entrée et une fonction de lui même de façon à obtenir un signal intermédiaire s(t) comportant des composantes spectrales situées en dehors de la bande étroite du signal d'entrée,
- une étape de filtrage K2 pour filtrer le signal intermédiaire s(t) et pour en extraire la partie de spectre non contenue dans la bande étroite du signal d'entrée,
- une étape d'addition K3 destinée à additionner le signal obtenu à l'issu de l'étape précédente au signal d'entrée e(t) en bande étroite pour obtenir en sortie un signal dont le spectre s'étale sur une bande dite bande large, plus large que la bande du signal d'entrée.

On a ainsi décrit et illustré à l'aide d'exemples un procédé destiné à générer un signal dit large bande à partir d'un signal en bande dite étroite, un appareil pour réaliser un tel procédé ainsi qu'un récepteur téléphonique comportant un tel appareil. Bien entendu, des variantes de réalisation pourront être apportées sans sortir du cadre de l'invention, notamment en ce qui concerne les bandes de fréquences mentionnées à titre d'exemple non limitatif, la définition de la fonction f(t) ainsi que les structures de filtres utilisés.

**Revendications**

1. Appareil destiné à générer un signal de sortie dit large bande à partir d'un signal d'entrée harmonique en bande dite étroite, comportant :

   - un dispositif d'extension de spectre recevant en entrée le signal en bande étroite pour générer un signal intermédiaire en bande élargie à partir d'informations contenues dans ledit signal d'entrée en bande étroite,
   - un dispositif de filtrage pour filtrer ledit signal intermédiaire et pour en extraire une partie de spectre non contenue dans la bande étroite du signal d'entrée,
   - un additionneur pour additionner le signal de sortie dudit dispositif de filtrage audit signal d'entrée en bande étroite et pour fournir en sortie ledit signal large bande,

   caractérisé en ce que ledit dispositif d'extension de spectre comprend un organe de traitement du signal pour multiplier ledit signal d'entrée en bande étroite par une fonction de lui-même.

2. Appareil selon la revendication 1, caractérisé en ce que ledit signal intermédiaire, noté s(t) est obtenu par un calcul de produit défini par :

   $$s(t) = e(t) * f(t)$$

   - où e(t) est le signal d'entrée en bande étroite et comporte au moins deux harmoniques,
   - f(t) est une fonction dépendante du signe et / ou de l'amplitude de e(t),
   - le symbole * représente l'opération de multiplication.

3. Appareil selon la revendication 2, caractérisé en ce que la fonction f(t) est égale à une constante A si e(t) est positif et égale à l'opposé de e(t) sinon.

4. Appareil selon la revendication 3, caractérisé en ce que ledit organe de traitement comporte des moyens pour ajuster la valeur de la constante A.

**5.** Appareil selon la revendication 2, caractérisé en ce que la fonction f(t) est égale à la fonction signe de e(t).

**6.** Appareil selon la revendication 2, caractérisé en ce que la fonction f(t) est égale à la fonction valeur absolue de e(t).

**7.** Appareil selon la revendication 1, caractérisé en ce que le signal d'entrée en bande étroite est obtenu par filtrage d'un signal harmonique original dans ladite bande étroite et comprend au moins deux harmoniques centrés autour des fréquences $\omega_0$ et $\omega_1$ correspondant à deux harmoniques dudit signal original dont le fondamental et / ou les premiers harmoniques sont situés en dehors de la bande étroite du signal d'entrée, et en ce que ledit organe de traitement du signal comporte des moyens pour calculer le produit de ces deux harmoniques.

**8.** Appareil selon l'une des revendications 1 à 7, caractérisé en ce que ledit signal d'entrée est un signal de parole.

**9.** Appareil selon l'une des revendications 1 à 8, caractérisé en ce que ladite bande étroite est la bande téléphonique comprise entre 300Hz et 3400Hz environ et en ca que ladite partie de spectre non contenue dans la bande étroite comporte des fréquences inférieures à 300Hz

**10.** Appareil selon l'une des revendications 1 à 9, caractérisé en ce que ledit dispositif de filtre comprend un filtre passe-bande coupant entre 50Hz et 250Hz environ.

**11.** Récepteur téléphonique destiné à recevoir en entrée un signal harmonique en bande étroite pour délivrer en sortie d'un haut-parleur / écouteur un signal de parole dit large bande comprenant des fréquences situées en dehors de la bande téléphonique, caractérisé en ce qu'il comporte un appareil selon l'une des revendications 1 à 8.

**12.** Procédé pour générer un signal dit large bande à partir d'un signal harmonique en bande dite étroite, comportant les étapes suivantes :

- une étape de réception dudit signal harmonique en bande étroite,
- une étape d'extension de spectre pour générer un signal intermédiaire en bande élargie à partir d'informations spectrales contenues dans le signal reçu en bande étroite,
- une étape de filtrage pour filtrer le signal intermédiaire et pour en extraire une partie de spectre non contenue dans la bande étroite,
- une étape d'addition pour additionner le signal obtenu à l'issu de l'étape précédente de filtrage au signal reçu en bande étroite et pour fournir en sortie un signal large bande,

caractérisé en ce que ladite étape d'extension de spectre comprend une étape de traitement du signal pour multiplier ledit signal d'entrée en bande étroite par une fonction de lui-même.

FIG.1

FIG.2A

FIG.2 B

FIG.3A

FIG.3B

| e(t) | — K0 |
|------|------|

| e(t)∗f(t) | — K1 |

| $\approx$ | — K2 |

| + | — K3 |

FIG.4

**Office européen des brevets**

**RAPPORT DE RECHERCHE EUROPEENNE**

Numéro de la demande

EP 99 20 3235

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 700 390 A (MACHIDA KENJI) 13 octobre 1987 (1987-10-13) * abrégé; figure 13 * * colonne 8, ligne 53 - colonne 9, ligne 29 * | 1,2,11,12 | G10L21/02 |
| A | US 5 581 652 A (ABE MASANOBU ET AL) 3 décembre 1996 (1996-12-03) * abrégé * | 1,11,12 | |
| D,A | EP 0 732 687 A (MATSUSHITA ELECTRIC IND CO LTD) 18 septembre 1996 (1996-09-18) * abrégé * | 1,11,12 | |

**DOMAINES TECHNIQUES RECHERCHES (Int.Cl.7)**

G10L
G10H

Le présent rapport a été établi pour toutes les revendications

| Lieu de la recherche | Date d'achèvement de la recherche | Examinateur |
|---|---|---|
| LA HAYE | 5 novembre 1999 | Ramos Sánchez, U |

**ANNEXE AU RAPPORT DE RECHERCHE EUROPEENNE**
**RELATIF A LA DEMANDE DE BREVET EUROPEEN NO.**        EP 99 20 3235

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-11-1999

| Document brevet cité au rapport de recherche | | Date de publication | Membre(s) de la famille de brevet(s) | | Date de publication |
|---|---|---|---|---|---|
| US 4700390 | A | 13-10-1987 | JP | 60147796 A | 03-08-1985 |
| | | | JP | 59170892 A | 27-09-1984 |
| | | | JP | 60082000 A | 10-05-1985 |
| US 5581652 | A | 03-12-1996 | JP | 2779886 B | 23-07-1998 |
| | | | JP | 6118995 A | 28-04-1994 |
| EP 0732687 | A | 18-09-1996 | JP | 8248997 A | 27-09-1996 |
| | | | JP | 2798003 B | 17-09-1998 |
| | | | JP | 8305396 A | 22-11-1996 |
| | | | JP | 9101798 A | 15-04-1997 |

EPO FORM P0460

Pour tout renseignement concernant cette annexe : voir Journal Officiel de l'Office européen des brevets, No.12/82